Europäisches Patentamt

European Patent Office

Office européen des brevets

(19)

(11) Publication number: **0 247 672 B1**

## EUROPEAN PATENT SPECIFICATION

(12)

(45) Date of publication of patent specification: **08.05.91**

(51) Int. Cl.⁵: **G01V 3/26**, G01B 7/14

(21) Application number: **87200905.5**

(22) Date of filing: **14.05.87**

(54) Method for determining the distance between adjacent wells.

(30) Priority: **29.05.86 GB 8613027**

(43) Date of publication of application:
**02.12.87 Bulletin 87/49**

(45) Publication of the grant of the patent:
**08.05.91 Bulletin 91/19**

(84) Designated Contracting States:
**DE ES FR GB IT NL**

(56) References cited:
**US-A- 3 725 777**
**US-A- 4 072 200**
**US-A- 4 372 398**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Barnett, Paul Austin**
**c/o Brunei Shell Petroleum Company**
**Sendirian Berhad Seria Brunei(MY)**
Inventor: **Hofstra, Paulus**
**c/o Brunei Shell Petroleum Company**
**Sendirian Berhad Seria Brunei(MY)**
Inventor: **Lehr, Bernd Christian**
**Volmerlaan 6**
**NL-2288 GD Rijswijk(NL)**

(74) Representative: **Aalbers, Onno et al**
**P.O. Box 302**
**NL-2501 CH The Hague(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The invention relates to a method for determining the distance between adjacent wells. More particularly it relates to a method for determining the distance between a first well in which a casing, drill string, or other ferromagnetic parts are present and a second well being drilled into subsurface earth formations adjacent said first well.

During drilling operations it is at times desirable to know the distance between a well being drilled and a previously drilled well. For example it may be desired to drill a directional relief-well to intercept a previously drilled well in which a blow-out has occurred. On the other hand, it may also be desired that a well being drilled must avoid collision with previously drilled wells.

Numerous procedures have been developed to determine the distance between adjacent wells for the above purposes.

US patent 3,745,446 discloses a logging method whereby the distance between a cased well and a second well is determined on the basis of magnetic logs taken in said second well. The logs are taken by a magnetometer assembly which is able to detect disturbances of the earth magnetic field caused by the magnetic field around the magnetic pole of a casing end in the cased well.

Another procedure is disclosed in U.S. patent No. 3,725,777. In the technique described in this patent the distance between a cased well and a second well is determined by first measuring in the second well magnetic field intensity and direction and by subsequently carrying out computer calculations using said measured values together with assumed values for the earth magnetic field and the location of the cased well relative to the second well.

Although the known procedures generally provide useful information about the distance between the adjacent wells they have the inherent disadvantage that complicated calculations are necessary to obtain the required data and that sometimes the results are inaccurate. A common problem is that a well may include various ferromagnetic parts which may each have separate magnetic poles. The magnetic fields of said poles may interfere at the locations where measurements are taken in the second well. In this situation it is often not possible to accurately derive the distance between the wells from magnetic logs taken in the relief well using the known techniques.

The invention provides a reliable method for determining the distance between a first well in which ferromagnetic parts are present and a second well on the basis of magnetic logs taken in said second well, by providing an accurate indication of the distance between said wells even if said ferromagnetic parts form a complex pattern of magnetic poles, i.e. a method for determining the distance between a first well containing ferromagnetic parts and a second well having a central axis. This method, according to the invention as set out in claim 1, comprises:

- measuring a characteristic of a magnetic field in the surroundings of said ferromagnetic parts at several depths in said second well;
- converting the measurement into a signal and plotting in a first diagram the amplitude of the component frequencies of the signal against the wavenumber thereof, said wavenumber being displayed on a logarithmic scale;
- calculating a characteristic, corresponding to said measured characteristic, of a theoretical magnetic field around a single monopole or dipole at a selected distance $d_o$ from the central axis of said second well;
- plotting in a second diagram the amplitude of the component frequencies of said calculated characteristic against the wavenumber thereof, said wavenumber being displayed on a logarithmic scale, and defining in said second diagram a peak wavenumber $k_o$ in the calculated amplitude wavenumber spectrum;
- overlaying said first and second diagram and finding a match which defines a peak wavenumber $k_m$ in said first diagram, and
- determining the distance $d_m$ between the wells from

$$d_m = \frac{k_o \cdot d_o}{k_m}$$

The invention will now be explained in more detail, by way of example, with reference to the accompanying drawings, in which:

Fig. 1 shows a sketch of a relief well passing a casing shoe in a target-well;

Fig. 2 shows the calculated axial and radial magnetic field components $B_z$ and $B_{xy}$ and the total field B when passing a magnetic monopole at closest distance d;

Fig. 3 shows the calculated axial and radial magnetic field components $B_z$ and $B_{xy}$ when passing a magnetic dipole at closest distance d;

Fig. 4 shows the magnetic disturbance $B_z$ measured in a relief-well when approaching a casing string in a target well;

Fig. 5 shows the wavenumber spectrum of the signal from Fig. 4 together with an overlay of the calculated wavenumber spectrum for a dipole;

Fig. 6A shows the theoretical wavenumber spectrum of $B_z$ (z) for a monopole with a closest distance of 3 m from a relief well; and

Fig. 6B shows the theoretical wavenumber spectrum of $B_z$ (z) for a dipole with a closest distance of 3 m from a relief well.

The method of the invention involves matching wavenumber spectra of the idealised theoretical magnetic field of a monopole or dipole with wave number spectra of features observed by means of the magnetometers located in a relief well.

In order to calculate the distance from a first relief well to a second target well equations must be derived describing the magnetic field B of a monopole and dipole.

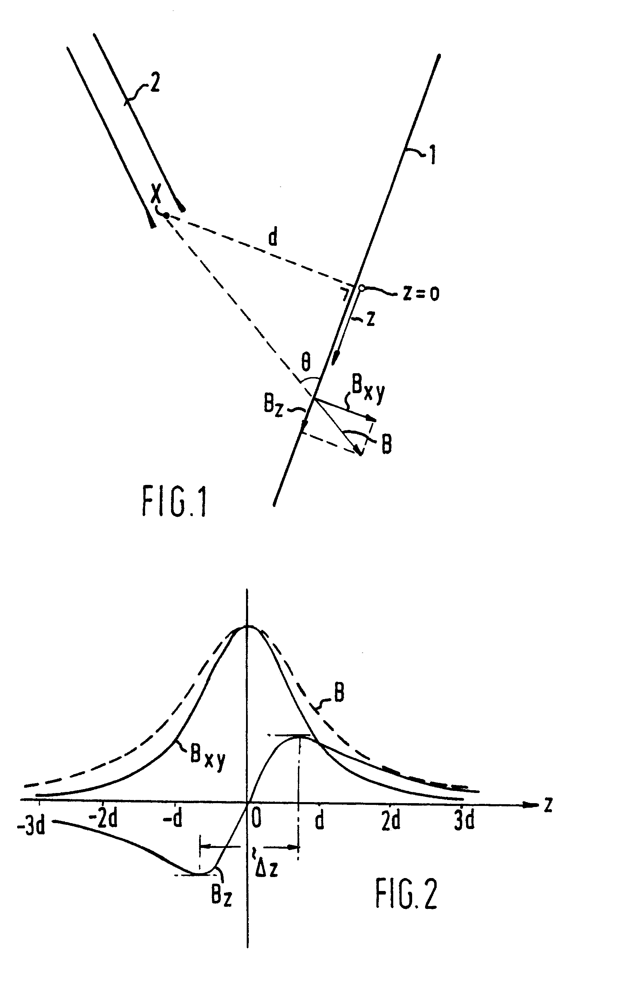

Referring to Figure 1, for a monopole at a point X in the target well 2, of pole strength P, the axial field component $B_z$ at a point at depth z relative to the point of closest approach z = 0 in the relief well 1 is defined as

$$B_z = \frac{P \cdot \cos \theta}{4\pi(z^2 + d^2)} \tag{1}$$

Expressing cos $\theta$ in terms of geometry, equation (1) becomes

$$B_z = \frac{P \cdot z}{4\pi(z^2 + d^2)^{3/2}} \tag{2}$$

This function for the axial component $B_z$ is shown in Figure 2 together with the corresponding function for the radial component $B_{xy}$ and the total field

$$B = \sqrt{B_z^2 + B_{xy}^2}.$$

The curve for the axial component $B_z$ has peak values at z = +/- 0.707d. Therefore, we can relate the extreme values of that curve to the distance d between target- and relief well through the equation,

$$d = \frac{\Delta z}{1.414} \tag{3}$$

where $\Delta z$ as defined in Fig. 2 is the depth interval between the minimum and maximum value of $B_z$ measured in the relief well.

Referring again to Figure 1, one can also consider a dipole of magnetic moment K . l, where l is the pole spacing, centred at point X in the target- well. Assuming that d≫1, the far-field approximation to the axial field for a dipole can be expressed as,

$$B_z = \frac{K(2z^2 - d^2)}{4\pi(z^2 + d^2)^{5/2}} \qquad (4)$$

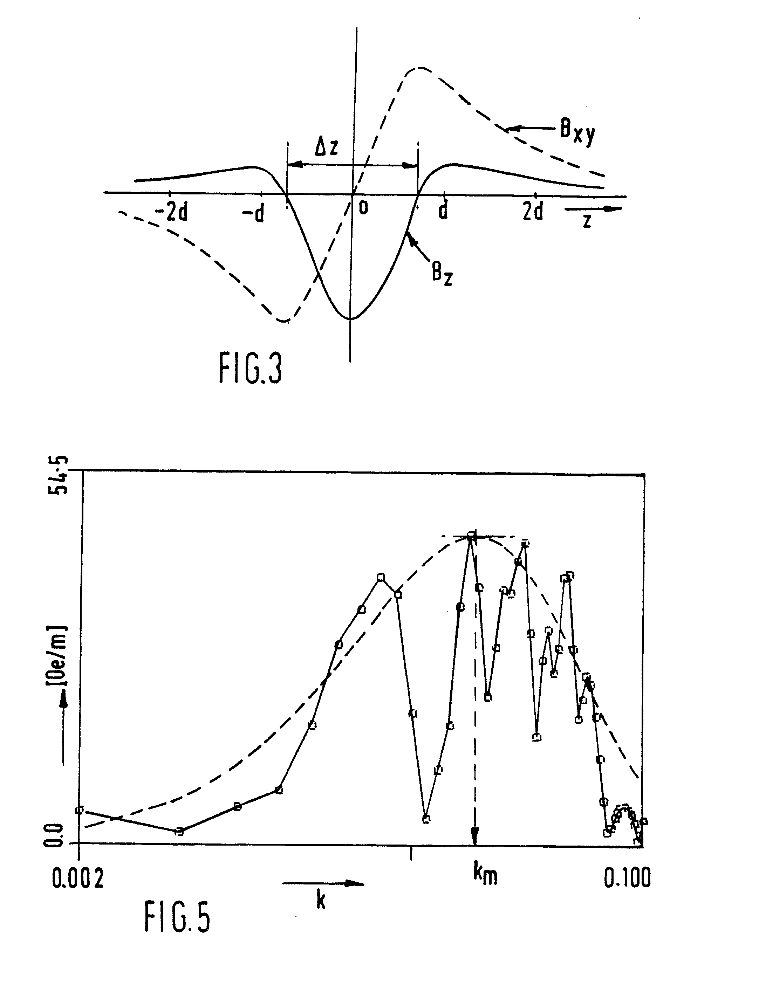

This function together with the corresponding function for the radial component $B_{xy}(z)$ is illustrated in Figure 3. The axial field component is zero at $z = +/- 0.707d$. Hence distance d to target can be related through

$$d = \Delta z/1.414 \qquad (5)$$

where $\Delta z$ is the depth interval between zero points in $B_z$ as defined in Figure 3.

Equivalent rules can be derived to calculate the target distance from e.g. the radial field component $B_{xy}$.

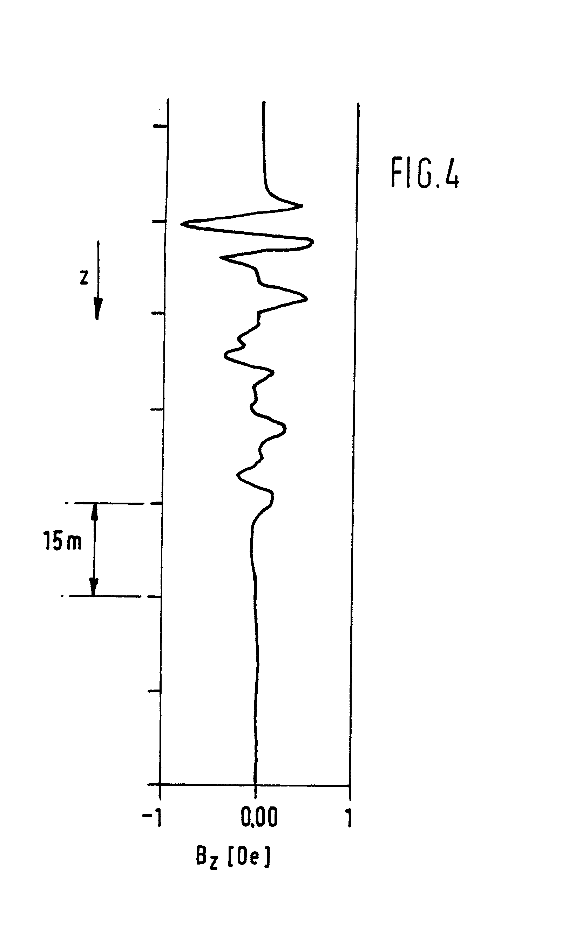

The approach outlined in the above is sound providing there is no interference between poles. If they do interfere like e.g. in the measurement shown in Fig. 4 the approach becomes inaccurate.

The method according to the invention for distance determination ("overlay method"), described below is less sensitive to interference and can give more accurate estimates. If interference is minimal, then this method forms an alternative to the approach described above.

In order to use the overlay method we must analyse e.g. the axial field component $B_z(z)$ in terms of its dominant frequencies or wavenumbers. To accomplish this, the Fourier Transform of this function must be calculated. Before this is done, equation (2) for a monopole is re-written as

$$d = \Delta z/1.414 \qquad (5)$$

This expression can in turn be generalized as,

$$B_z = \frac{P}{4\pi d^2} \cdot \frac{z/d}{[1+(z/d)^2]^{3/2}} \qquad (6)$$

where g is a function of z/d.

The corresponding function for a dipole can be written as,

$$B_z = \frac{P}{4\pi d^2} \cdot g(z/d) \qquad (7)$$

$$B_z = \frac{K}{4\pi d^3} \cdot j(z/d) \qquad (8)$$

where j is also a function of z/d.

If there is more than one pole on a target, like e.g. a drillstring, and all are at about the same distance d from the relief-well, then the resulting field component $B_z$ can be expressed as a convolution of the expression of one monopole or dipole and a function H(z) related to the geometry of the drillstring i.e. positions of tool joints. This function can be expressed as

$$H(z) = \frac{1}{4\pi} \sum_{i=1}^{n} \delta(z - z_i) \cdot K_i \qquad (9)$$

where $z_i$ is the projection of the $i^{th}$ pole on the relief-well track and $K_i$ is the strength of the $i^{th}$ pole.

The axial field component for a monopole can thus be expressed as,

$$B_z = \frac{1}{d^2} \cdot g(z/d) * H(z) \qquad (10)$$

where * denotes convolution. Equation (8) for a dipole is,

$$B_z = \frac{1}{d^3} \cdot j(z/d) * H(z) \qquad (11)$$

The axial field component of a monopole or dipole field may be expressed as a Fourier Series of the form,

$$F\{B_z(z)\}_n = \sum_{i=1}^{\infty} (\alpha_n \cos 2\pi K_n z_i) + (\beta_n \sin 2\pi K_n z_i) \qquad (12)$$

"n" is called the harmonic number and "k" is a wavenumber or the reciprocal of the wavelength.

Let $F\{g(z)\} = G(k)$ be the Fourier Transform of the function $g(z)$. An important property of the Fourier Transform is,

$F\{g(z/d)\} = G(kd)$ (13)

This means that in the wavenumber domain, an increase in d results in a "squeezing" of the wavenumber axis.

Another property of the Fourier Transform is,

$F\{f * g\} = F(f) \cdot F(g)$ (14)

or a convolution in the spatial domain is equivalent to a simple multiplication in the Fourier domain. Hence equations (10) and (11) can be expressed as,

$$F\{g(z/d)\} = G(kd) \qquad (13)$$

$$F\{f * g\} = F(f) \cdot F(g) \qquad (14)$$

This result

$$F\{B_z\} = \frac{1}{d^2} \cdot F\{g(z/d) * H(z)\} = \frac{1}{d^2} G(kd).F\{H(z)\} \quad (15)$$

and

$$F\{B_z\} = \frac{1}{d^3} \cdot F\{j(z/d) * H(z)\} = \frac{1}{d^3} J(kd).F\{H(z)\} \quad (16)$$

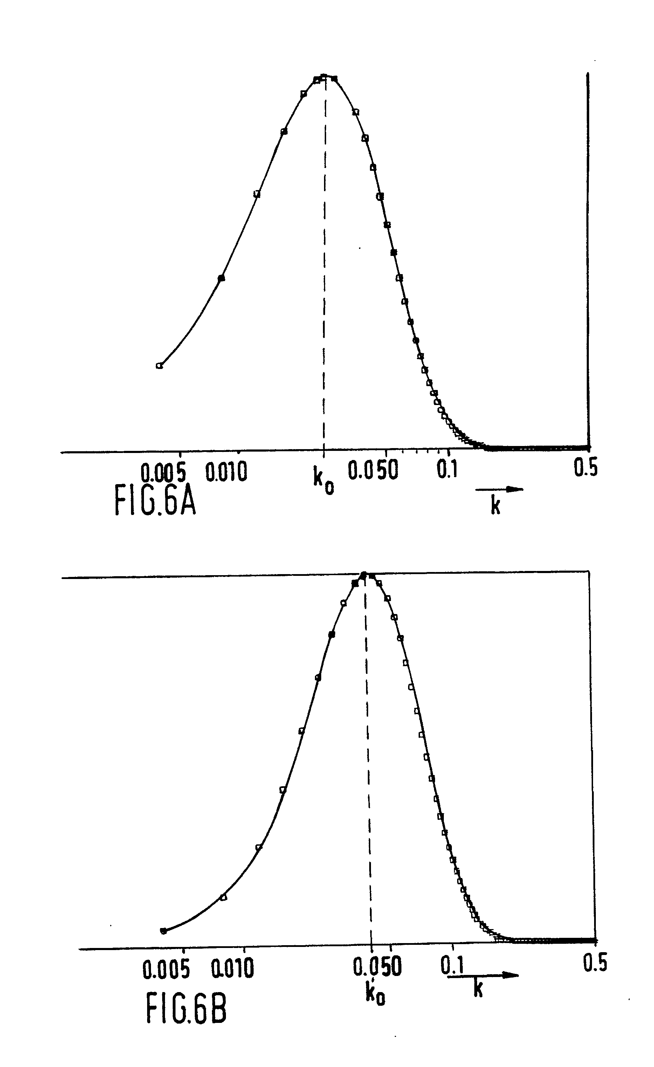

is particularly important since it implies that the Fourier Transform of the magnetic field originating from a series of poles on a drillstring in the target- well consists of two parts. The first part comprises the signal of one monopole or dipole. Superimposed on this is the contribution from the geometrical function determined by the spacing of the poles on the drillstring. This can be illustrated by plotting the amplitude of the component frequencies of the signal against the corresponding wavenumber. An example is depicted in Figure 5.

The next step is to derive the distance to the target. This is done using an overlay technique. This technique involves attempting to find, in the amplitude/wavenumber spectrum of the field component $B_z$, the underlying amplitude/wavenumber spectrum of a single monopole or dipole. Plotting the amplitude/wavenumber spectrum of the axial field component of a single monopole or dipole at a distance $d_o$ from a point in the relief-well, results in such signatures as seen in Figures 6A and 6B, respectively. The wavenumber axis is displayed on a logarithmic scale since we can write for e.g. a dipole,

$$J(\log kd) = J(\log k + \log d) (17)$$

This implies that a change in distance d results in a simple shift of J in the logarithmic wavenumber domain.

In each case a peak wavenumber $k_o$ can be determined. By plotting the amplitude/wavenumber spectrum of the actual signal and overlaying the plot of a spectrum related to a single monopole or dipole, ultimately a match can be found between the single pole spectrum and the envelope of the signal spectrum which determines the peak wavenumber, $k_m$, of the actual signal as indicated by the dashed line in Fig. 5. The distance from relief-well to target-well can then be found from,

$$J(\log kd) = J(\log k + \log d) \quad (17)$$

If the two wells are parallel to each other, the distance derived in equation (18) is a constant. However, if the wells are converging, the distance calculated represents a mean distance for the interval where the magnetic disturbance occurs.

It is obvious that an equivalent procedure can be derived for the radial component $B_{xy}$, for the total magnetic field

$$d_m = \frac{k_o \cdot d_o}{k_m} \quad (18)$$

and for the axial gradient of one of said components $B_{xy}$, $B_z$ or of

$$B = \sqrt{B_{xy}^2 + B_z^2},$$

the total magnetic field B.

It will further be appreciated that the contribution of the earth magnetic field to the measured data obtained by magnetometer measurements taken in the relief well can be eliminated in several ways. In some situations this contribution is only of minor importance and can be ignored. If desired, the contribution of the earth magnetic field to the measured data can be eliminated by known filtering techniques in the wavenumber domain or by subtracting said contribution from the data obtained by said magnetometer measurements before carrying out the Fourier Transform described hereinbefore. Since these correction techniques are known per se to those skilled in the art no detailed description thereof is necessary.

Various other modifications of the present invention will become apparent to those skilled in the art from the foregoing description and accompanying drawings.

Such modifications are intended to fall within the scope of the appended claims.

## Claims

1. A method for determining the distance between a first well (2) containing ferromagnetic parts and a second well (1) having a central axis, the method comprising:
   - measuring a characteristic of a magnetic field in the surroundings of said ferromagnetic parts, at several depths in said second well, and characterized by:
   - converting the measurement into a signal and plotting in a first diagram the amplitude of the component frequencies of the signal against the wavenumber thereof, said wavenumber being displayed on a logarithmic scale;
   - calculating a characteristic, corresponding to said measured characteristic, of a theoretical magnetic field around a single monopole or dipole at a selected distance $d_0$ from the central axis of said second well;
   - plotting in a second diagram the amplitude of the component frequencies of said calculated characteristic against the wavenumber thereof, said wavenumber being displayed on a logarithmic scale, and defining in said second diagram a peak wavenumber $k_0$ in the calculated amplitude wavenumber spectrum;
   - overlaying said first and second diagram and finding a match which determines a peak wavenumber $k_m$ in said first diagram, and
   - determining the distance $d_m$ between the wells from

$$d_m = \frac{k_0 \cdot d_0}{k_m}$$

2. The method of claim 1, wherein said calculated and measured characteristics are the components parallel to said central axis of said theoretical and measured magnetic field, respectively.

3. The method of claim 1, wherein said calculated and measured characteristics are the components perpendicular to said central axis of said theoretical and measured magnetic field, respectively.

4. The method of claim 1 wherein the axial and two mutually perpendicular radial components of said magnetic fields are calculated and measured, and said calculated and measured characteristics are the magnitude of the total theoretical and measured magnetic field, respectively.

5. The method of claim 1 wherein said calculated and measured characteristics are the axial gradients of the theoretical and measured magnetic field or of one of its components, respectively.

## Revendications

1. Procédé pour déterminer la distance entre un premier puits (2) contenant des éléments ferromagnétiques et un second puits (1) ayant un axe central, ce procédé comprenant :

la mesure d'une caractéristique d'un champ magnétique au voisinage des éléments ferromagnétiques selon plusieurs profondeurs, et ce dans le second puits, et étant caractérisé par :

la conversion de la mesure en un signal et le tracé sur un premier graphique de l'amplitude des fréquences élémentaires du signal en fonction du nombre d'onde de celles-ci, ce nombre d'onde étant porté sur une échelle logarithmique ;

le calcul d'une caractéristique d'un champ magnétique théorique qui règne autour d'un monopôle ou d'un dipôle unique à une distance $d_0$ choisie par rapport à l'axe central du second puits, cette caractéristique correspondant à la caractéristique mesurée ;

le tracé sur un second graphique de l'amplitude des fréquences élémentaires de la caractéristique calculée en fonction du nombre d'onde de celles-ci, ce nombre d'onde étant porté sur une échelle logarithmique, la définition sur le second graphique d'un nombre d'onde de pic $k_0$ qui se situe dans le spectre des nombres d'ondes dont l'amplitude a été calculée ;

la superposition des premier et second graphiques et la recherche d'un ajustement qui définisse un nombre d'onde de pic $k_m$ sur le premier graphique ; et

la détermination de la distance $d_m$ entre les puits à partir de :

$$d_m = \frac{k_0 \cdot d_0}{k_m}$$

2. Procédé selon la revendication 1, dans lequel les caractéristiques calculées et mesurées sont les composantes qui sont respectivement parallèles à l'axe central du champ magnétique théorique et du champ magnétique mesuré.

3. Procédé selon la revendication 1, dans lequel les caractéristiques calculées et mesurées sont les composantes qui sont respectivement perpendiculaires à l'axe central du champ magnétique théorique et du champ magnétique mesuré.

4. Procédé selon la revendication 1, dans lequel la composante axiale ainsi que les deux composantes radiales des champs magnétiques qui sont perpendiculaires l'une à l'autre sont calculées et mesurées, et dans lequel les caractéristiques calculées et mesurées sont respectivement l'amplitude du champ magnétique total théorique et du champ magnétique total mesuré.

5. Procédé selon la revendication 1, dans lequel les caractéristiques calculées et mesurées sont respectivement les gradients axiaux du champ magnétique théorique et du champ magnétique mesuré ou de l'une de ses composantes.


**Ansprüche**

1. Verfahren zum Bestimmen des Abstandes zwischen einem ersten Loch (2), das ferromagnetische Teile enthält, und einem zweiten Loch (1) mit einer zentralen Achse, wobei das Verfahren vorsieht eine
   - Messung einer charakteristischen Größe des magnetischen Feldes in der Umgebung der genannten ferromagnetischen Teile und zwar in unterschiedlichen Tiefen des genannten zweiten Loches, gekennzeichnet durch:
   - Umwandeln des Meßergebnisses in ein Signal und Auftragen der Amplitude der Frequenzkomponenten des Signals über deren Wellenzahlen in einem ersten Diagramm, wobei die Wellenzahlen logarithmisch dargestellt sind;
   - Berechnen einer zur genannten gemessenen charakteristischen Größe korrespondierenden charakteristischen Größe eines theoretischen Magnetfeldes um einen einzigen Monopol oder Dipol an einem ausgewählten Abstand $d_0$ von der zentralen Achse des genannten zweiten Loches;
   - Auftragen der Amplitude der Frequenzkomponenten der genannten berechneten charakteristischen Größe über der zugehörigen Wellenzahl in einem zweiten Diagramm, wobei die Wellenzahl auf einem logarithmischen Maßstab dargestellt ist, und Bestimmen einer Spitzen-Wellenzahl $k_0$ im

EP 0 247 672 B1

berechneten Amplituden-Wellenzahl-Spektrum im genannten zweiten Diagramm;

- Überlagern der genannten ersten und zweiten Diagramme und Auffinden einer Anpassung, welche eine Spitzen-Wellenzahl $k_m$ im genannten ersten Diagramm bestimmt und
- Bestimmen der Distanz $d_m$ zwischen den Löchern gemäß der Gleichung

$$d_m = \frac{k_o \cdot d_o}{k_m}$$

2. Verfahren nach Anspruch 1, wobei die genannten berechneten und gemessenen charakteristischen Größen die Komponenten des genannten theoretischen bzw. des gemessenen Magnetfeldes parallel zur genannten zentralen Achse sind.

3. Verfahren nach Anspruch 1, wobei die genannten berechneten und gemessenen charakteristischen Größen die Komponenten des genannten theoretischen bzw. des gemessenen Magnetfeldes senkrecht zur genannten zentralen Achse sind.

4. Verfahren nach Anspruch 1, wobei die axialen und zwei aufeinander senkrecht stehende radiale Komponenten der genannten Magnetfelder berechnet und gemessen werden und wobei die genannten berechneten und gemessenen charakteristischen Größen die Größe des gesamten theoretischen bzw. gemessenen Magnetfeldes sind.

5. Verfahren nach Anspruch 1, wobei die genannten berechneten und gemessenen charakteristischen Größen die axialen Gradienten des theoretischen bzw. gemessenen Magnetfeldes oder einer ihrer Komponenten sind.

FIG.1

FIG.2

FIG.3

FIG.5

FIG.4

**FIG.6A**

**FIG.6B**